# EUROPEAN PATENT APPLICATION

(11) **EP 0 898 125 A1**
(43) Date of publication of application: **24.02.1999**
(21) Application number: 98202782.3
(22) Date of filing: 19.08.1998
(51) Int. Cl.: F24H 3/08, F24H 6/00

(54) **Air heating apparatus with cast heat exchanger**

(30) Priority: 19.08.1997 NL 1006796
(71) Applicant: Holding J.H. Deckers N.V., Curacao (AN)
(72) Inventor: Deckers, Jan Hubertus, 5912 TW Venlo (NL)
(74) Representative: Smulders, Theodorus A.H.J., Ir.

(57) **Abstract**

An air heating apparatus includes at least one heat exchanger (3) and means (7) for passing air to be heated along the at least one heat exchanger (3). The at least one heat exchanger (3) comprises a burner, at least one flue gas duct (10) and a heat exchanging surface which can be brought in contact with air to be heated. At least the heat exchanging surface and the at least one flue gas duct (10) are at least partly and preferably completely incorporated into a body cast in a light metal or a light-metal alloy, more particularly aluminum or an aluminum alloy. The arrangement is such that during use flue gases heated with the aid of the burner can be passed through the at least one flue gas duct, separately from the air to be heated, and heat exchange occurs between the heated flue gases and the air to be heated.

## Description

This invention relates to an air heating apparatus comprising at least one heat exchanger and means for passing air to be heated along the heat exchanger. Such air heating apparatuses are known from practice.

The known air heating apparatus comprises an enameled plate steel housing including a likewise plate steel heat exchanger, into which flue gases heated with the aid of a gas-fired burner can be passed, for the purpose of heat exchange with the air being passed through the housing. The heat exchanger of this known air heating apparatus comprises, for instance welded, tube sections, with joints obtained by stapling and spot welding. Further, the joints between the heat exchanger and the housing are similarly obtained. This entails a disadvantage in that the heat exchanger, in particular flue gas-carrying parts thereof, is not fully gas-tight with respect to the surroundings and the housing, with the result that flue gases can flow into the air stream to be heated and/or the space to be heated. In order to obviate this disadvantage at least partly, this known air heating apparatus includes a flue gas suction fan for creating a relative reduced pressure in the heat exchanger, at least in a flue gas discharge duct connected thereto, so that in case of any leakage, only air will flow from the housing and/or the surroundings into the heat exchanger.

The known heat exchanger is of simple construction, but is costly in terms of production technique, while it is not particularly well controllable and has a relatively low efficiency, in particular as a result of the reduced pressure mentioned. Moreover, in this gas-fired air heating apparatus, a mixing of the gas with primary combustion air is obtained only in the burner, at least above the burner deck,, which further reduces the efficiency of the air heating apparatus and moreover leads to a little advantageous burning pattern. A further disadvantage of this known air heating apparatus is that the housing and at least large parts of the heat exchanger are manufactured from relatively thin plate steel, which is particularly sensitive to corrosion in particular, specifically as a result of condensation and temperature fluctuations, while enameling of the plate steel is a costly and environment-unfriendly treatment.

The object of the invention is to provide an air heating apparatus of the type described in the opening paragraph hereof, which obviates the above-mentioned disadvantages while maintaining the advantages thereof. To that end, an air heating apparatus according to the invention is characterized by the features according to claim 1.

A heat exchanger having a body cast in a light metal or light-metal alloy, which body comprises at least a burner space, a flue gas duct and heat-exchanging surface, provides the advantage that in such a heat exchanger no joints or like openings to be sealed need to be present, so that in a simple manner a flue gas passage completely separated from the air to be heated and the space to be heated can be obtained. Moreover, such a cast heat exchanger provides the advantage that it is particularly simple to manufacture, with a suitable wall thickness, such that the heat exchanger has a suitable heat capacity. The use of light metal or a light-metal alloy here provides the advantage that a good corrosion resistance is obtained without necessitating costly further operations to that effect. In particular aluminum or aluminum alloys are suitable for that purpose. Further, a cast heat exchanger has the advantage that, for instance, heat transfer surface-enlarging projections, ribs or like elements can be cast integrally, both internally and externally, as well as connecting means and the like. As a result, an air heating apparatus according to the invention is robust, is of simple construction, is easy to manufacture and maintain completely gas-tight, and is economic in use. Moreover, such an air heating apparatus has a particularly long life.

In further elaboration, an air heating apparatus according to the invention is characterized by the features according to claim 3.

The use of a cast heat exchanger for an air heating apparatus according to the invention provides the advantage that it can be simply designed for condensation of at least a part of the flue gases within the heat exchanger, without this entailing adverse consequences for the air heating apparatus. The heat exchanger, in particular the heat transfer surface thereof, can then be laid out such that during use, by heat transfer to the passing air to be heated, a cooling of at least a part of the heat exchanger occurs, such that the heated flue gases will condense on it. As a result, the efficiency of the air heating apparatus is further increased considerably, yielding commensurate advantages in terms of convenience, while the operation and life of the heating apparatus are not thereby adversely affected.

In a particularly advantageous embodiment, an air heating apparatus according to the present invention is characterized by the features according to claim 4.

By providing for a jacket for the at least one heat exchanger, in which jacket a channel is included, a still better heating of the air can be obtained, at least, the heat generated in the heat exchanger is better utilized. Through the at least one channel, via the inlet opening, a fluid to be heated can be introduced, which, once heated, can be discharged again via the outlet opening. By the jacket itself and by the fluid flowing in the channel in question, heat will be partly transferred to the outside of the jacket, where heat exchange with passing air can take place. As a result, in a particularly advantageous manner, the heat generated is utilized. Heat exchange in the channel in question is particularly effective, specifically as a result of the relatively large contact surface and the relatively long contact time, while moreover passing air is also heated.

In further elaboration, an air heating apparatus according to the invention is characterized by the features according to claim 5.

Positioning the outlet opening of the channel in the main air channel of the air heating apparatus provides the advantage that relatively strongly heated air is mixed with the air in the main air channel, so that the temperature of the latter air is raised considerably. Positioning the inlet opening in the main air channel provides the advantage that air heated by at least the outside of a heat exchanger is introduced in preheated condition into the channel of a heat exchanger, so that a still more favorable heat exchange is obtained in the channel in question. Improving the heat exchange is evidently advantageous to the efficiency of the heating apparatus. Positioning both the inlet opening and the outlet opening of the channel in the heat exchanger in the main air channel in which the heat exchangers are placed provides the combination of the two above-mentioned advantages.

In a further advantageous embodiment, an apparatus according to the invention is characterized by the features according to claim 6.

By connecting a fan to the inlet of the channel of the heat exchanger, relatively much air can be propelled through the channel in the heat exchanger at a relatively high speed, so that the heat exchange between the flue gases in the heat exchanger and the air in the channel is improved still further. It will be clear that a fan can also be arranged adjacent the outlet opening.

In an alternative embodiment, an air heating apparatus according to the invention is further characterized by the features according to claim 9.

Positioning two channels in a heat exchanger in an air heating apparatus according to the present invention provides the advantage that concurrently, or independently, both air and a liquid, for instance water, can be heated with such an apparatus, allowing the water to be used, for instance, as tap water or for floor heating, while the air can be used for space heating. Thus, in a suitable manner a combined heating apparatus is obtained.

In a first preferred embodiment, an air heating apparatus according to the invention is characterized by the features according to claim 11.

The use of one or more heat exchangers having preferably a substantially cylindrical body provides the advantage that a large circumferential surface area with respect to the volume of the heat exchanger is obtained. Moreover, owing to the cylindrical shape, heat stresses in the cast heat exchanger are kept within acceptable limits in an advantageous manner. Because the at least one heat exchanger permits the air to be heated to flow around it on all sides, optimum use is made of the heat transfer surface, while the outermost heat transfer surface, on the side of the air, is preferably enlarged with elements suitable for that purpose, such as ribs and projections, preferably having a relatively low flow resistance.

In a particularly advantageous embodiment, an air heating apparatus according to the invention is characterized by the features according to claim 12.

Modular construction of an air heating apparatus according to the invention provides the particular advantage that with the aid of standard elements a wide range of air heating apparatuses can be obtained, each having the desired capacity. Here, use can be made of identical or similar heat exchangers, which can be combined, as desired, within a fixed housing or housing to be constructed from modules. The use of standard elements provides economic advantages. Moreover, the use of a series of modular heat exchangers provides the advantage that an air heating apparatus constructed with such heat exchangers has a high reliability, since in case of failure of one of the heat exchangers, sufficient capacity will be left to heat sufficient air, at least temporarily. Further, a series of relatively small heat exchangers having a relatively small cross-sectional area provides an advantage over a single, large heat exchanger having the same capacity, in that the relatively small heat exchangers are relatively simple and inexpensive to manufacture and, given the same heat transfer surface and heat capacity, can have a smaller radius, at least a smaller cross-sectional area, and thus occupy a smaller volume. This provides the advantage that such an air heating apparatus can be made of relatively compact construction and moreover affords great freedom of design.

In further elaboration, an air heating apparatus according to the invention is characterized by the features according to claim 13.

A control device for modulating control of at least the burner of the at least one heat exchanger provides the advantage that the capacity of the air heating apparatus can be simply and accurately controlled on the basis of, for instance, a measured heat requirement in the space to be heated. As a result, optimum use can be made of the available heat, which is energetically advantageous. Especially when a plurality of heat exchangers are used in a single air heating apparatus according to the invention, the advantage thereby gained is that a particularly broad capacity control is possible by switching one or more of the heat exchangers on or off and/or by modulation of one or more burners, while for each of the heat exchangers the optimum burning procedure for the heat requirement in question can be set. As a result, at all times a particularly high efficiency can be obtained, while condensation can occur, and moreover a changing heat requirement can be rapidly responded to, which enhances comfort.

The invention further relates to a control unit for use in an air heating apparatus according to the invention, characterized by the features according to claim 16.

Such a control unit enables particularly advantageous, economic and environment-friendly use of an air heating apparatus.

Further elaborations of an air heating apparatus and a control unit according to the invention are described in the subclaims.

The invention further relates to a heat exchanger for use in an air heating apparatus according to the invention.

To clarify the invention, exemplary embodiments of an air heating apparatus and control unit will be further described with reference to the drawings, wherein:
Fig. 1 schematically shows in sectional side elevation an air heating apparatus in a first embodiment;
Fig. 2 schematically shows in sectional side elevation a heat exchanger for use in an air heating apparatus according to the invention;
Fig. 3 schematically shows in top plan view five different modular constructions of air heating apparatuses according to the invention, having different capacities;
Fig. 4 schematically shows an air heating apparatus according to the invention together with a control unit for controlling the operation of the heating apparatus; and
Fig. 5 shows an alternative schematic embodiment of an air heating apparatus according to the invention.

In this description, the same or corresponding parts have the same or corresponding reference numerals.

An air heating apparatus 1 according to the invention comprises a housing 2 having arranged therein a number of heat exchangers 3 which, oriented substantially vertically, extend through an air channel 4. The air channel 4 extends through the housing 2, between an air inlet 5 and an air outlet 6, while at least the air outlet 6, during use, extends into a space to be heated. An air heating apparatus 1 according to the invention can be arranged both for private and for industrial use. In the air channel 4, preferably adjacent the air inlet 5, a fan 7 is arranged for passing air to be heated through the air channel, along the heat exchangers 3.

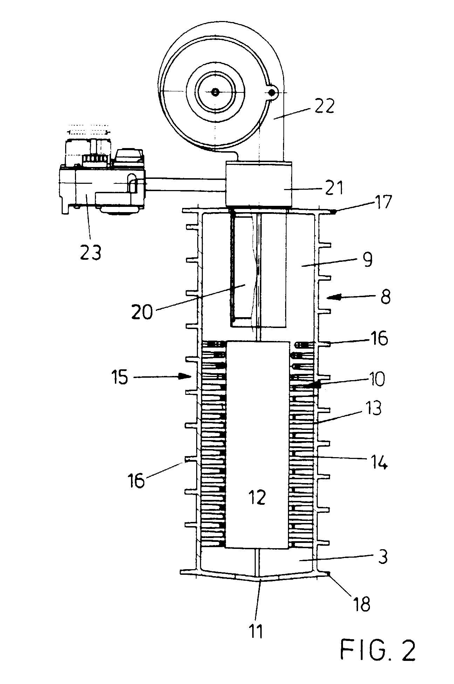

Fig. 2 shows in cross-sectional side elevation a heat exchanger 3 for use in an air heating apparatus according to the invention. This heat exchanger 3 comprises a body 8, cast in a light metal or light-metal alloy, preferably an aluminum or aluminum alloy. The body 8 comprises, adjacent the upper side, a burner space 9, which links up with a flue gas passage space 10, which is provided, at the lower end, with a flue gas discharge opening 11, which further functions as condensate discharge opening. This will be further discussed hereinafter. The flue gas passage space 10 is defined by a centrally arranged, closed tubular insulation body 12 and a series of integrally cast rows and columns of projections 14 extending inwardly from the outer wall 13 of the body and having their free end substantially abutting against the insulation body 12. Thus, between the outer wall 13, the insulation body 12 and the rows and columns of projections 14, a large number of meandering flue gas ducts have been obtained, from the burner space 9 to the flue gas discharge opening 11. In these meandering flue gas passages, an intensive contact between flue gases heated during use and the cast body of the heat exchanger is obtained.

The outside of the outer wall 13 forms a heat transfer surface 15 on the side of the air, which has been enlarged by integrally cast, outwardly extending, heat transfer surface-enlarging elements 16, e.g., ribs, projections and the like. These heat transfer surface-enlarging elements are so positioned and dimensioned that their air flow resistance is relatively low. Provided around the upper end of the body 8 is a first flange 17, which extends outwards, around the circumference of the body, in a plane at right angles to the longitudinal direction of the heat exchanger 3. Provided adjacent the lower end of the body 8 is a similar, second flange 18. The purpose of the first and second flanges will be further discussed hereinafter.

From above the heat exchanger 3, a burner 20 with a shell-shaped burner surface has been inserted into the burner space 9, which is mounted on a gas/air mixing block 21. Connected to the gas/air mixing block is a second fan 22, as well as a gas block 23. Such a burner assembly is known per se from practice, referred to as premix burner. It will be clear that it is also possible to use other suitable burners, preferably of the premix-type, by which good combustion properties and a high efficiency can be obtained.

In the embodiment shown, the heat exchanger 3 has a substantially cylindrical body 8, so that a particularly advantageous ratio is obtained between the magnitude of the inside and the outside surface of the outer wall 13 and the volume of the heat exchanger, at least of the body 8. The thickness of the outer wall 13 and the dimensions of the projections 14 and heat transfer surface-enlarging elements 16 can be suitably selected for obtaining a good heat capacity. The wall thickness 13 can be, e.g., 2 or more millimeters, e.g., about 5 mm on average, while the wall thickness and the dimensions of the projections and/or the heat transfer surface-enlarging elements may be different along the body. Such variations are understood to be within reach of those skilled in the art.

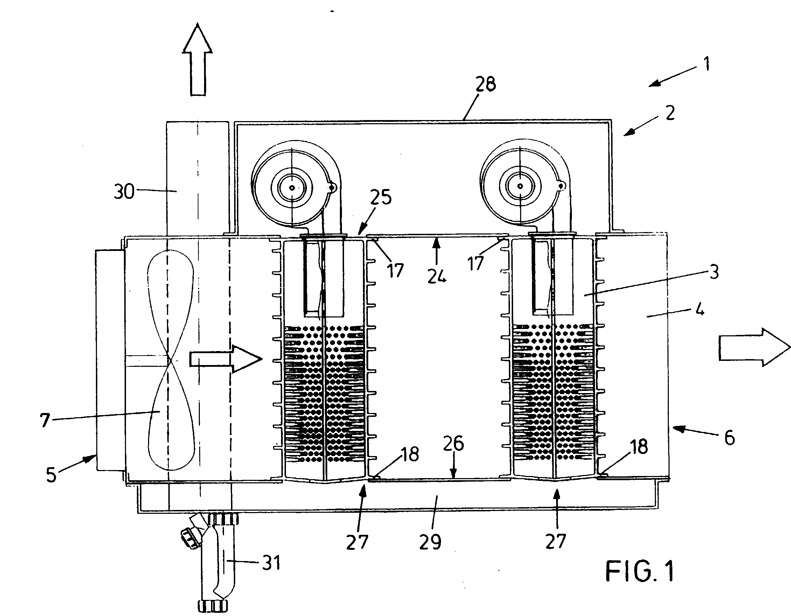

As appears from Fig. 1 in particular, in the top wall 24 of the air channel 4, a series of openings 25 are provided, corresponding to the number of heat exchangers to be arranged in the air channel 4, while opposite the upper openings 25 corresponding lower openings 27 have been provided in the lower wall 26 of the air channel 4. The inside distance between the upper wall 24 and the lower wall 26 of the air channel 4 corresponds to the distance between the upper side of the first flange 17 and the lower side of the second flange 18 of the heat exchanger 3. A heat exchanger 3 can therefore be arranged in vertical orientation between the upper opening 25 and the lower opening 27 in the air channel 4 with a proper fit. The underside of the heat exchanger 3 is preferably slightly depressed in downward direction, which depression can be received in the lower opening 27 with a proper fit. Thus a centering of the heat exchanger is obtained in a simple manner. Using suitable packing means, not shown, in a simple manner a gas-tight seal can be obtained between the upper wall 24 and the first flange 17 and between the lower wall 26 and the second flange 18. As a result, an optimum, gas-tight separation is obtained between the flue gas passages within the heat exchangers 3 and the air channel 4. The relative distance and the relative position of the heat exchangers 3 in the air channel 4 are selected such that a relatively low flow resistance occurs in the air channel, while yet a good heat transfer can take place between burner-heated flue gases, in use flowing through the flue gas passages in the flue gas passage space 10, and the air flowing along the heat exchangers. The distance between two heat exchangers arranged next to each other, viewed in the longitudinal direction of the air channel, can be selected to be, for instance, approximately equal to the diameter of the heat exchanger in question. The relative distance between two heat exchangers arranged next to each other in the air channel can then be selected to be, for instance, equal to half the width of the heat exchangers, and the distance between a heat exchanger and an adjacent wall of the air channel can be selected to be equal to a quarter of the diameter of the heat exchanger. Many variations are possible, however, depending on the further lay-out of the air heating apparatus and the expected heat requirement.

In assembled condition, each second fan 22 extends outside the air channel 4, at the top thereof, with a covering hood 28 arranged for enclosing in outward direction the fans 22, the gas blocks 23 and the gas/air mixing blocks 21 and control means, if any, to be further discussed hereinafter. Arranged along the underside of the air channel 4, under at least the heat exchangers 3, is a central flue gas discharge 29, which is connected to a chimney 30. The central flue gas discharge 29 functions also as a sump for condensate which has precipitated on the inside of at least a part of the heat exchanger, which condensate can be removed from the sump 29 via a suitable, for instance plastic, siphon 31, for instance to a sewer. Because the heat exchangers 3 are cast in a corrosion-resistant, temperature-resistant light metal, each heat exchanger 3 of an air heating apparatus according to the invention can be made of condensing design, so that a high efficiency is obtained during use. Moreover, such an embodiment is robust and has a long life.

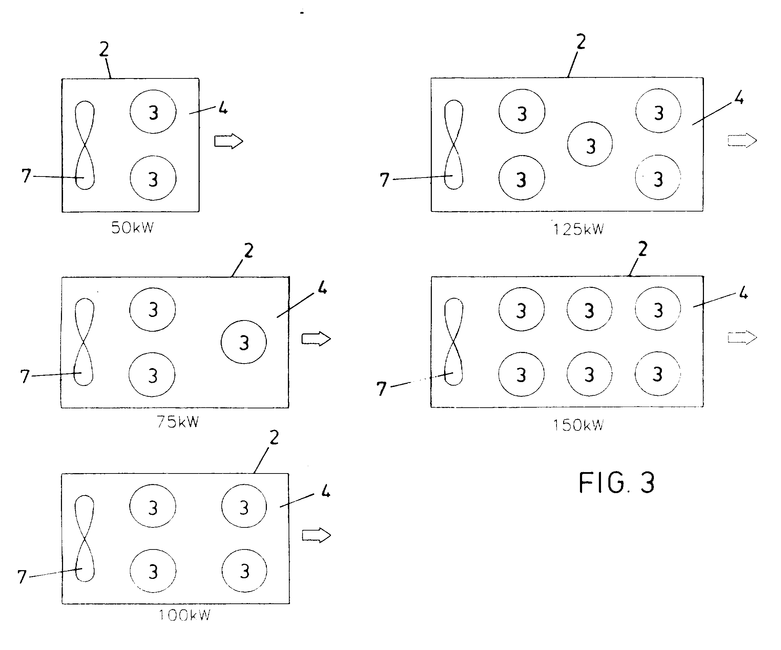

The capacity of an air heating apparatus according to the invention primarily depends on the number of heat exchangers 3 employed in it and the capacity of each of the heat exchangers. In the exemplary embodiments shown, the use of identical heat exchangers within a single heating apparatus has been opted for, which provides the advantage that especially the cast parts of such heat exchangers can be manufactured as standard parts in a relatively inexpensive manner using a single die. Additionally, this provides the advantage that a large number of air heating apparatuses with different capacities can thus be obtained, as shown in Fig. 3. Starting from a heat exchanger 3 having an individual capacity of, for instance, 25 kW, the air heating apparatuses shown in Fig. 3 have respective capacities of 50 kW, 75 kW, 100 kW, 125 kW and 150 kW. Evidently, by the use of heat exchangers 3 of a different capacity and/or by combination of a different number of heat exchangers, the possible capacity can be varied. Moreover, heat exchangers having mutually different capacities can be combined in an air heating apparatus.

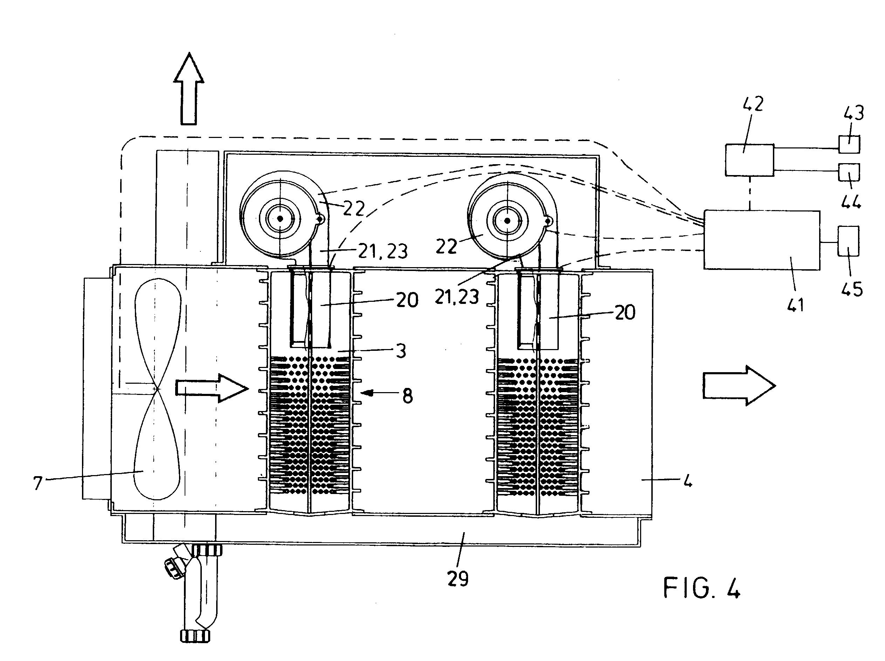

The control unit 40 (Fig. 4) comprises a central control unit 41, to which are connected the at least one first fan 7, the second fans 22, the gas blocks 23, the gas/air mixing blocks 21 and the burner control means, in particular the ignition of each burner 20. By means of the central control unit 41 the different burners can be switched on and off, as well as be controlled for modulation between a minimum and maximum power. Further connected to the central control unit 41 is a weather-dependent control 42, provided with an outside temperature sensor 43 and an inside temperature sensor 44. Furthermore connected to the central control unit 41 is a programming unit 45 for programming the central control unit, for instance on the basis of user preferences, specifications of use, calorific values and the like. With the aid of the weather-dependent control 42 and the central control unit 41, during use the instantaneous heat demand for the heating apparatus is calculated, on the basis of which the fans 7, 22 and the heat exchangers 3 are switched on and off and the burners 20, where necessary, are modulated, such that at all times the required capacity for the heat demand in question is switched on. To that effect, for instance a single heat exchanger can be switched to maximum power, or a number of heat exchangers to less than maximum power, and in the case of the maximum heat demand, all heat exchangers can be switched to maximum power. A heating apparatus according to the invention then provides the additional advantage that in case of failure of one of the heat exchangers 3 the full capacity of the other heat exchangers 3 is maintained, so that the heating apparatus can, at least temporarily, be kept in use.

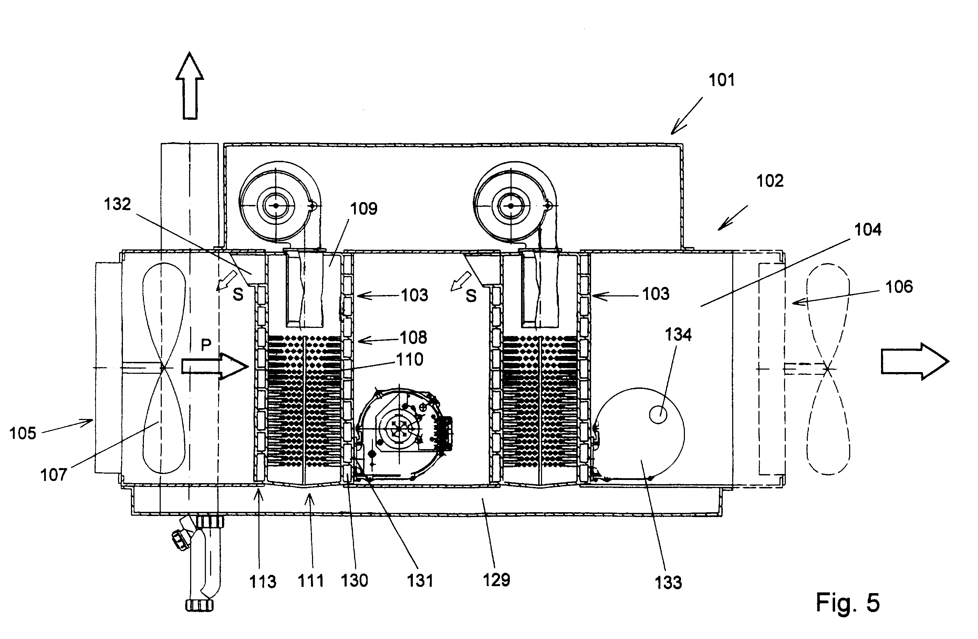

In Fig. 5 an alternative, particularly advantageous embodiment of an air heating apparatus according to the present invention is shown. It comprises again a housing 102 having arranged therein a number of heat exchangers 103. The air channel 104 extends between air inlet 105 and air outlet 106. In the air channel 104, a fan 107 is arranged, adjacent the air inlet 105 or optionally at a different position, for instance adjacent the air outlet 106, as schematically represented in broken lines in Fig. 5. By positioning the fan 107 adjacent the outlet opening 106, that is, by using a suction fan 107 in the air channel 104, the advantage can be achieved of obtaining a still better mixing of the air flowing through the air channel 104 and the air heated in the relevant heat exchanger, flowing from the or each outlet opening 132 to be further described hereinafter. A heating apparatus 101 according to Fig. 5 is substantially equal to the above-described embodiments, in construction and use. Insofar as not described here, reference is made to Figs. 1-5, and the corresponding description.

The heat exchangers 103 as shown in Fig. 5 have a body 108, provided with a burner space 109, a flue gas passage space 110, from which in Fig. 5 an insulation body 112 has been omitted, and a flue gas discharge opening 111 which connects to the central flue gas discharge 129.

In this embodiment, the outer wall 113 of the heat exchanger 103 incorporates a second air channel 130, for instance of helical configuration, which extends between an inlet opening 131 arranged adjacent the lower end of the heat exchanger 103 and an outlet opening 132 arranged adjacent the upper end of the heat exchanger 103, that is, on the side proximal to the burner space 109. The second air channel 130 extends preferably around the entire body 108, for instance helically, or meandering, and is preferably integrally cast. Connected to the inlet opening 131 is a third fan 133 with a blow opening, the third fan 133 being provided with a suction opening 134, which is preferably in fluid communication with the air channel 104. As shown in Fig. 5, the direction of outflow of the outlet opening 132 is directed substantially in the direction S, opposite to the direction of passage P of the main air channel 104. The third fan 133 is preferably arranged on the rear side, viewed in the direction of flow P, of the heat exchanger 103. Optionally, in a manner described hereinbefore, the outside of the outer wall 113 can be provided with air-side heat transfer surface-enlarging elements, for instance ribs, projections and the like, as described before.

A heating apparatus 101 according to Fig. 5 provides the advantage that air heating can be obtained in a better manner and with a higher efficiency, in that in the main air channel 104, air pre-heated through heat exchange with the outside of the outer wall 113 is at least partly drawn in by the third fan 133 and is forced through the second air channel 130, and in the second air channel 130 a still better, further heating of the air is obtained under exchange of heat with the flue gases flowing through the burner space 109 and the flue gas passage space 110. The air which has thus been optimally heated is then led via the outlet opening 132 back into the main air channel 104, where it is blown and/or drawn by the fan 107 in the direction of the outlet opening 106. Thus, by including one or more heat exchangers 103 as shown in Fig. 5 in a main air channel 104, an air heating apparatus can be obtained which has a still higher efficiency as a result of particularly good heat exchange, both on the outside of the heat exchanger and in the second air channel 130. It will be clear that also heat exchangers 3 as shown in Fig. 2 and heat exchangers 103 as shown in Fig. 5 can be combined in a single main air channel 4, 104.

It will be clear that counterflow of the air through the second air channel with respect to the direction of flow of the combustion gases is advantageous with a view to the heat exchange. However, other configurations are also possible. Also, the inlet opening 130 and the outlet opening 132 can be provided at other positions, both with respect to the heat exchanger 103 itself and with respect to the main air channel 104. Also, the third fans 133 can be arranged differently, for instance so as to extend largely outside the main air channel 104, with the suction opening 134 located in the main air channel 104, at least connecting thereto via suitable supply pipes. Further, a heat exchanger 103 can be arranged such that the inlet opening 130, viewed in the direction of flow P, faces upstream, the fan 133 is omitted, and during use forced circulation of air flowing through the main air channel 104, and then through the second air channel 130 is obtained, for instance by the use of a favorably dimensioned air inlet, the use of an air pressure difference occurring in the second air channel 130 as a result of a rise in the temperature of the air in it, and suitable dimensioning of the heat exchanger 103 and the part of the main air channel 104 extending around it. Such adaptations will be immediately clear to and implementable by those skilled in the art. Also, one or more of the outlet openings 132 of the heat exchangers 103 can discharge air flowing through the second air channel 130 to the exterior of the main air channel 104, other than through the end 106 of the main air channel 104. Thus, for instance, separate air heating for different spaces can be obtained.

A heating apparatus 101 according to Fig. 5 can be made relatively small in proportion to the power, while simply providing, in the above-described manner, for the discharge of flue gas, the discharge of condensate and the like. Of course, configurations as shown in Fig. 4 and comparable configurations can also be used here.

If desired, at least one of the heat exchangers 103 can be used for heating liquid, in particular water such as tap water, by replacing the third fan 133 with connecting means for connecting a water pipe to the inlet opening 131, while the outlet opening 132 can be connected to a water drain pipe. In this manner, for instance, warm tap water can be obtained in a simple manner, while air heating in a suitable manner still remains possible. Moreover, in such an apparatus, the direction of passage of air in the main air channel 104 can be reversed, such that warm air can be withdrawn from a space connected to the opening 106, while in the main air channel 104, with the aid of the heat exchangers 103, heat can be extracted from the air and be exchanged with water flowing through the second channel 130.

By way of illustration, a number of dimensions of a heat exchanger according to the invention are given, which dimensions are not to be construed as limiting in any way.

A heat exchanger according to the invention, sand-cast in aluminum, has, for instance, an average diameter of 200 mm, an average length of 700 mm and an average wall thickness of 5 mm. Such a heat exchanger can, for instance, have a capacity of 25 kW, while during use a transport of air through the air channel can be obtained, such that the outer wall is at least partly cooled from 350°C to, for instance, less than 40°C, such that on the inside of the relevant part of the heat exchanger condensation occurs. The insulation body of such a heat exchanger has, for instance, a diameter of 100 mm and a height of about 350 mm. Each heat exchanger is preferably capable of modulating between 30% and 100% of the maximum capacity.

The invention is not in any way limited to the exemplary embodiments presented in the description and the drawings. Many variations are possible.

The at least one heat exchanger of an air heating apparatus according to the invention can have a body of a shape other than cylindrical, for instance a square or polygonal cross section, while moreover an aerodynamic shape such as the shape of a drop in horizontal cross section can be selected, or, conversely, means for increasing the flow resistance in the air channel can be included. Further, in the air channel, air baffles can be included for obtaining a specific flow pattern of air through the air channel, for obtaining an intensive contact between the air and the heat transfer surface. Further, various heat exchangers can be positioned in the air channel in a manner different from that shown, while moreover the air channel can comprise one or more bends, while the or each burner can be disposed, for instance, on a side of the heating apparatus. Further, it is possible to use heat exchangers including water channels for heating, for instance, sanitary water or space heating water, optionally instead of, or in addition to, an air channel present in the heat exchanger in question.

Also, a control of a different kind can be used for controlling the heat exchangers, for instance a non-modulating control, or a control that is not weather-dependent. For the heat transfer surface-enlarging elements and the projections, a variety of shapes can be selected, and the projections can be replaced with ribs, ridges and the like. Moreover, the insulation body can be made of different design or be omitted when the flue gas passage space has such dimensions that the projections have their free ends virtually in mutual abutment. Also, each heat exchanger can be secured in the air channel in a different manner, as long as a gas-tight seal is obtained.

These and many similar variations are understood to fall within the scope of the invention.

## Claims

1. An air heating apparatus comprising at least one heat exchanger and means for passing air to be heated along the at least one heat exchanger, wherein the at least one heat exchanger comprises a burner, at least one flue gas duct and a heat exchanging surface which can be brought in contact with air to be heated, wherein at least the heat exchanging surface and the at least one flue gas duct are at least partly and preferably completely incorporated into a body cast in a light metal or a light-metal alloy, more particularly aluminum or an aluminum alloy, the arrangement being such that during use flue gases heated with the aid of the burner can be passed through the at least one flue gas duct, separately from the air to be heated, with heat exchange occurring between the heated flue gases and the air to be heated.

2. An air heating apparatus according to claim 1, wherein at least a first fan is arranged as a heating air fan for passing the air to be heated along the at least one heat exchanger, and wherein the at least one heat exchanger is provided with a second fan for the, preferably pre-mix, supply of combustion air to the burner.

3. An air heating apparatus according to claim 1 or 2, wherein the at least one heat exchanger is arranged such that during use the heat transfer surface thereof is at least partly brought to such a temperature that condensation of at least a part of the flue gases occurs.

4. An air heating apparatus according to any one of claims 1-3, wherein the at least one heat exchanger comprises a jacket which surrounds at least a part of the flue gas duct, while in the jacket at least one channel is included provided with an inlet opening and an outlet opening.

5. An air heating apparatus according to claim 4, wherein the inlet opening and/or the outlet opening terminate in a main air channel, surrounding the at least one heat exchanger, for the air to be heated.

6. An air heating apparatus according to claim 4 or 5, wherein a fan is connected to the inlet opening, for blowing air to be heated into the at least one channel, which fan is preferably arranged for drawing in air from a main air channel, surrounding the at least one heat exchanger, for the air to be heated.

7. An air heating apparatus according to any one of claims 4-6, wherein the at least one inlet opening, viewed in the direction of flow of the air to be heated, is located adjacent the rear side of the heat exchanger in question, while the at least one outlet opening, viewed in the direction of flow, is located adjacent the front side thereof.

8. An air heating apparatus according to any one of claims 4-7, wherein the inlet opening of the at least one heat exchanger is located adjacent the end of the heat exchanger remote from the burner space, while the outlet opening is located adjacent the burner space.

9. An air heating apparatus according to any one of claims 4-8, wherein the jacket comprises at least two channels, at least one of the channels being arranged for guiding air, and at least one of the channels being arranged for guiding a liquid, in particular water.

10. An air heating apparatus according to any one of claims 1-9, wherein the at least one heat exchanger is arranged in a housing, which housing is provided with air supply means and air discharge means, the at least one heat exchanger being so constructed and disposed inside the housing that during use it permits air to be heated to flow around it along a complete circumferential surface.

11. An air heating apparatus according to claim 10, wherein the at least one heat exchanger has a substantially cylindrical body, and the cylindrical circumferential surface forms a heat transfer surface and is preferably provided with heat transfer surface-enlarging elements, for instance ribs or projections.

12. An air heating apparatus according to any one of the preceding claims, which air heating apparatus is of modular construction, while a number of heat exchangers can be provided, each equipped with a burner and flue gas discharge means.

13. An air heating apparatus according to any one of the preceding claims, wherein means are provided for the modulating control of the at least one burner for varying the heat release in time, preferably depending on the instantaneous heat demand.

14. An air heating apparatus according to any one of the preceding claims, comprising at least two heat exchangers, wherein control means are provided for switching on and off, on the basis of at least one measured heat demand, at least one of the heat exchangers, at least the burner thereof.

15. An air heating apparatus according to any one of the preceding claims, wherein at least two heat exchangers are provided, and these heat exchangers are identical to each other.

16. A control unit for use in an air heating apparatus according to any one of the preceding claims, provided with at least one heat sensor for placement in a space to be heated and/or in the outside air, temperature-setting means and means for the, preferably modulating, control of the at least one heat exchanger.

17. A control unit according to claim 16, for use in an air heating apparatus with at least two heat exchangers, wherein means are provided for switching on and off and modulating the burners of the heat exchangers, preferably individually and in relation to each other.

18. A heat exchanger for use in an air heating apparatus according to any one of claims 1-15.
